# EUROPÄISCHE PATENTSCHRIFT

(11) **EP 2 179 204 B1**
(45) Veröffentlichungstag und Bekanntmachung des Hinweises auf die Patenterteilung: **23.11.2011**
(21) Anmeldenummer: 08760135.7
(22) Anmeldetag: 28.05.2008
(51) Int. Cl.: F16K 11/07, F01L 1/34

(54) **VENTILTEIL EINES STEUERVENTILS ZUR STEUERUNG VON DRUCKMITTELSTRÖMEN**
VALVE PART FOR A CONTROL VALVE FOR CONTROL OF PRESSURE MEDIUM FLOWS
ELEMENT D'UNE SOUPAPE DE COMMANDE POUR LA COMMANDE DE FLUX DE FLUIDE SOUS PRESSION

(30) Priorität: 18.07.2007 US 950487 P
(43) Veröffentlichungstag der Anmeldung: 28.04.2010
(73) Patentinhaber: Schaeffler Technologies GmbH & Co. KG, 91074 Herzogenaurach (DE)
(72) Erfinder: STALLMANN, John, Washington, MI 48095 (US)
(86) Internationale Anmeldenummer: PCT/EP2008/056540
(87) Internationale Veröffentlichungsnummer: WO 2009/010331

(56) Entgegenhaltungen:
- DE-A1- 10 346 443
- GB-A- 2 189 007

## Beschreibung

### Gebiet der Erfindung

Die Erfindung liegt auf dem technischen Gebiet der Steuerventile und betrifft nach ihrer Gattung ein durch einen Aktuator betätigtes Ventilteil eines Steuerventils zur Steuerung von Druckmittelströmen gemäß dem Oberbegriff von Patentanspruch 1.

### Stand der Technik

In Brennkraftmaschinen werden Gaswechselventile durch die Nocken einer durch die Kurbelwelle in Drehung versetzten Nockenwelle betätigt, wobei über Anordnung und Form der Nocken die Steuerzeiten der Gaswechselventile gezielt festlegbar sind. Vor dem Hintergrund thermodynamischer Prozesse hat es sich als vorteilhaft erwiesen, wenn während des Betriebs der Brennkraftmaschine in Abhängigkeit von deren aktuellen Betriebszustand, wie Drehzahl oder Last, auf die Steuerzeiten der Gaswechselventile Einfluss genommen wird, welche durch die relative Drehlage zwischen Nocken- und Kurbelwelle vorgegeben sind. Hinlänglich bekannt ist die Anwendung von Vorrichtungen zur Änderung und Fixierung der relativen Drehlage zwischen Nocken- und Kurbelwelle, im Allgemeinen als "Nockenwellenversteller" bezeichnet.

Nockenwellenversteller umfassen gewöhnlich ein über ein Antriebsrad mit der Kurbelwelle drehfest verbundenes Antriebsteil und ein nockenwellenfestes Abtriebsteil, sowie einen zwischen An- und Abtriebsteil geschalteten beispielsweise hydraulischen Stellantrieb, welcher das Drehmoment von dem Antriebsteil auf das Abtriebsteil überträgt und eine Fixierung sowie Verstellung der relativen Drehlage zwischen An- und Abtriebsteil ermöglicht.

Hydraulische Nockenweckenwellenversteller sind typischer Weise als Axialkolbenversteller oder Rotationskolbenversteller ausgebildet. Bei einem Axialkolbenversteller ist das Antriebsteil über eine Schrägverzahnung mit einem Kolben verzahnt, welcher seinerseits über eine Schrägverzahnung mit dem Abtriebsteil verzahnt ist. Zwischen An- und Abtriebsteil ist ein Druckraum ausgebildet, der durch den Kolben in zwei Druckkammern geteilt wird. Bei einem Rotationskolbenversteller sind das in Form eines Außenrotors ("Stator") ausgebildete Antriebsteil und das in Form eines Innenrotors ("Rotor") ausgebildete Abtriebsteil konzentrisch und zueinander drehverstellbar angeordnet. Im radialen Zwischenraum zwischen Stator und Rotor sind Druckräume geformt. In jeden dieser Druckräume erstreckt ein mit dem Rotor verbundener Flügel wodurch jeder Druckraum in zwei Druckkammern geteilt wird. Durch gezielte Druckbeaufschlagung der Druckkammern eines jeweiligen Druckraums, das heißt durch Erzeugen einer Druckdifferenz über dem Druckkammerpaar eines jeweiligen Druckraums, kann das Antriebsteil gegen das Abtriebsteil verschwenkt werden, so dass eine Drehung der Nockenwelle und demzufolge eine Änderung der relativen Drehlage zwischen Nockenwelle und Kurbelwelle bewirkt wird. Andererseits kann die relative Drehlage durch eine entsprechend gleiche Druckbeaufschlagung der beiden Druckkammern eines Druckraums beibehalten werden.

Eine Steuerung des hydraulischen Nockenwellenverstellers erfolgt durch eine Steuereinheit, welche auf Basis von erfassten Kenndaten der Brennkraftmaschine den Zu- und Abfluss von Druckmittel zu bzw. von den einzelnen Druckkammern steuert. Die Druckmittelströme werden durch ein von der Steuereinheit gesteuertes Steuerventil (Proportionalventil) geregelt.

Steuerventile zur Steuerung der Druckmittelströme für Nockenwellenversteller sind als solche hinlänglich bekannt und beispielsweise in der europäischen Patentanmeldung EP 1 596 041 A2 und der deutschen Offenlegungsschrift DE 102 39 207 A1 der Anmelderin beschrieben. Sie umfassen als wesentliche Komponenten einen Aktuator, typischer Weise ein Elektromagnet mit einem hohlzylindrischen Magnetgehäuse, in dessen Hohlraum eine Spulenwicklung und ein axial beweglicher Magnetanker mit Stößel angeordnet sind, sowie ein hydraulisches Ventilteil mit einem hohlzylindrischen Ventilgehäuse, in dessen Hohlraum ein axial verschiebbarer Steuerkolben aufgenommen ist. Bei Bestromung des Magnetankers wirkt der Stößel auf den Steuerkolben des Ventilteils ein, so dass dieser gegen die Druckkraft einer Druckfeder axial verschoben werden kann, um hierdurch die Druckmittelströme zu regeln.

In einer typischen Bauart ist das Ventilgehäuse an seinem Außenumfang mit einer Mehrzahl axial beabstandeter Ringnuten versehen, in die jeweils in den Hohlraum des Ventilgehäuses mündende Radialbohrungen eingearbeitet sind, welche als Druckanschluss und Arbeitsanschlüsse dienen. Der Steuerkolben kann in Form eines Hohlkolbens mit einem einseitig offenen Hohlraum versehen sein, dessen Öffnung als Ablaufanschluss dient. Befindet sich die Hohlraumöffnung des Steuerkolbens am stößelabgewandten Ende, kann sie als Axialöffnung gestaltet werden. Befindet sich die Hohlraumöffnung des Steuerkolbens jedoch am stößelzugewandten Ende, ist es erforderlich, diese als Radialöffnung zu gestalten, um dem Stößel eine ausreichende Angriffsfläche am Steuerkolben zu bieten. Ein beispielhafter Aufbau eines derartigen Ventilteils ist FIG. 4 dargestellt. DE 10346443 offenbart auch ein solches Ventilteil.

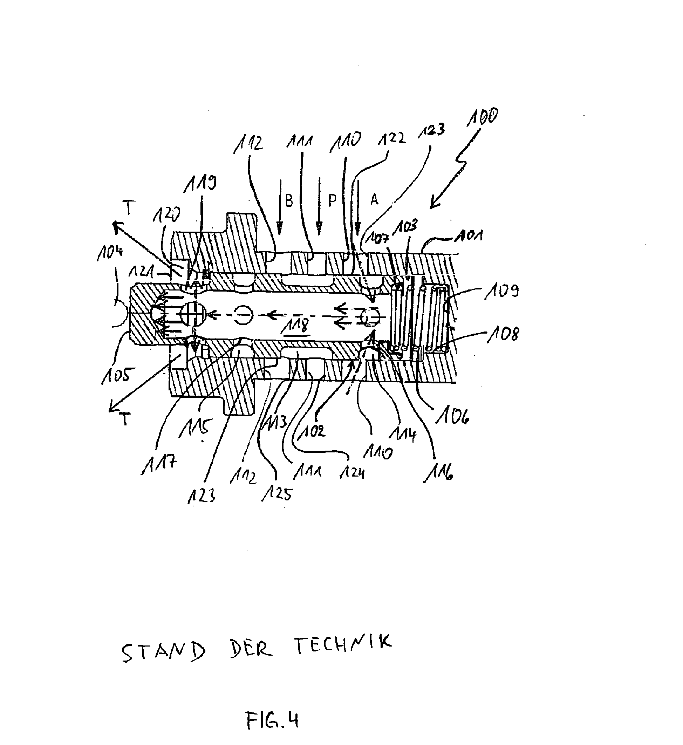

Demnach umfasst das insgesamt mit der Bezugszahl 100 bezeichnete Ventilteil eines elektromagnetischen Steuerventils ein hohlzylindrisches Ventilgehäuse 101, das einen Ventilgehäusehohlraum 103 mit einer axialen Hohlraumöffnung 121 umgibt. Im Ventilgehäusehohlraum 103 ist ein Steuerkolben 102 axial verschiebbar aufgenommen. An der in Fig. 4 linken Stirnfläche 105 des Steuerkolbens 102 greift ein lediglich teilweise dargestellter Stößel 104 an, der an einem Magnetanker eines in Fig. 4 nicht dargestellten Elektromagneten starr befestigt ist. Wenn der Magnetanker bestromt wird, wird der Stößel in axialer Richtung zum Ventilteil 100 verschoben und verschiebt hierbei den Steuerkolben 102 entgegen der Federkraft einer Druckfeder 106. Die Druckfeder 106 liegt an ihrem einen Ende dem stößelabgewandten Ende des Steuerkolbens 102 an und ist zu diesem Zweck in einer axialen ersten Ringstufe 107 aufgenommen. An ihrem anderen Ende stützt sich die Druckfeder 106 an einer senkrecht zur Axialenrichtung orientierten Bodenfläche 109 einer axialen zweiten Ringstufe 108 des Ventilgehäusehohlraums 103 ab.

Das Ventilgehäuse 101 ist an seinem Außenumfang mit drei axial beabstandeten Ringnuten versehen, nämlich eine erste Ringnut 124, eine zweite Ringnut 125 und eine dritte Ringnut 126. In die Ringnuten, sind, gleichmäßig um den Umfang verteilt, erste Radialbohrungen 110, zweite Radialbohrungen 111 bzw. dritte Radialbohrungen 112 eingearbeitet, die jeweils in den Ventilgehäusehohlraum 103 münden. In dem dargestellten Axialschnitt gehen die Ringnuten unmittelbar in die Radialbohrungen über, so dass sie zeichnerisch nicht von den Ringnuten unterschieden sind. Wie durch die Pfeile angedeutet, dient die erste Ringnut 124 mit den ersten Radialbohrungen 110 als erster Arbeitsanschluss A, die zweite Ringnut 125 mit den zweiten Radialbohrungen 111 als Druckanschluss P und die dritte Ringnut 126 mit den dritten Radialbohrungen 112 als zweiter Arbeitsanschluss B.

Der Steuerkolben 102 ist in Form eines Hohlkolbens ausgebildet, wobei der Steuerkolbenhohlraum 118 durch eine zur Stirnfläche 109 des Ventilgehäuses 101 hin offene Sacklochbohrung geformt wird. In den Außenumfang des Steuerkolbens 102 sind drei Ringnuten eingearbeitet, nämlich eine vierte Ringnut 114, eine fünfte Ringnut 115 und eine zwischen der vierten und fünften Ringnut befindliche sechste Ringnut 113. Die vierte Ringnut 114 ist mit gleichmäßig um den Umfang verteilten vierten Radialbohrungen 116 und die fünfte Ringnut 115 mit gleichmäßig um den Umfang verteilten fünften Radialbohrungen 117 versehen, die jeweils in den Steuerkolbenhohlraum 118 münden. Weiterhin ist der Steuerkolben 102 an seinem stößelseitigen Endabschnitt mit um den Umfang verteilt angeordneten sechsten Radialbohrungen 119 versehen, welche den Steuerkolbenhohlraum 118 mit einer doppelt abgesetzten, axialen dritten Ringstufe 120 fluidleitend verbinden, die in die Hohlraumöffnung 121 des Ventilgehäuses 101 mündet. Die Hohlraumöffnung 121 dient als Ablaufanschluss T. Angrenzend an die sechste Ringnut 113 befinden sich ein erster Ringsteg 122 und ein zweiter Ringsteg 123, deren Umfangsflächen so geformt sind, dass sie bei axialer Verschiebung des Steuerkolbens 102 die ersten und dritten Radialbohrungen 110, 112 überdecken bzw. freigeben können, um auf diese Weise über eine Änderung der Öffnungsquerschnitte die Durchflussmenge von Druckmittel zu regeln.

Je nach axialer Position des Steuerkolbens 102 können somit der erste Arbeitsanschluss A und der zweite Arbeitsanschluss B wahlweise mit dem Druckanschluss P oder dem Tankanschluss T fluidleitend verbunden werden. In FIG. 4 ist eine Situation gezeigt, in welcher der erste Arbeitsanschluss A mit dem Tankanschluss T verbunden ist, während der zweite Arbeitsanschluss B mit dem Druckanschluss P verbunden ist. Strömt Druckmittel (wie durch die gestrichelten Pfeile angegeben) in den Steuerkolbenhohlraum 118 ein, werden die radial-einwärts gerichteten Druckmittelströme in einen zum stößelseitigen Ende des Steuerkolbenhohlraums 118 gerichteten axialen Druckmittelstrom umgelenkt, der im Wesentlichen mittig des Steuerkolbenhohlraums 118 strömt. Anschließend wird der axiale Druckmittelstrom in radial-auswärts gerichtete Druckmittelströme umgelenkt, welche in den Ablaufanschluss T abgeleitet werden. Zwangläufig entsteht hierbei durch Umlenken des axialen Druckmittelstroms ein Staudruck an der Stirnfläche des Steuerkolbenhohlraums 118, welcher den Steuerkolben 102 in eine Richtung belastet, die zur Federkraft der Druckfeder 106 gleichgerichtet ist (in Fig. 4 nach links). Zudem werden Strömungswirbel bei der Umlenkung des axialen Druckmittelstroms erzeugt. In der Folge führen diese Effekte zu einem Ungleichgewicht der Druckkräfte vor allem in der Mitte des Steuerkolbens 102, die unerwünschte Kraftkurven für die gewünschten axialen Verschiebungen des Steuerkolbens 102 erzeugen. Darüber hinaus muss der vom Elektromagneten betätigte Stößel 104 den Steuerkolben 102 gegen einen höheren Widerstand verschieben, so dass der Elektromagnet ausreichend robust gestaltet werden muss, um einer vermehrten Wärmeerzeugung bei den hierzu erforderlichen höheren Stromstärken standzuhalten.

### Zusammenfassung der Erfindung Aufgabe der Erfindung

Demgegenüber besteht die Aufgabe der vorliegenden Erfindung darin, ein Ventilteil eines elektromagnetischen Steuerventils zur Regelung von Druckmittelströmen zur Verfügung zu stellen, durch welche die oben genannten, mit einem Umlenken des axialen Druckmittelstroms einher gehenden Nachteile vermieden werden können.

### Lösung der Aufgabe

Diese und weitere Aufgaben werden nach dem Vorschlag der Erfindung durch ein Ventilteil eines Steuerventils zur Steuerung von Druckmittelströmen, insbesondere für einen hydraulischen Nockenwellenversteller einer Brennkraftmaschine, mit den Merkmalen des unabhängigen Anspruchs gelöst. Vorteilhafte Ausgestaltungen der Erfindung sind durch die Merkmale der Unteransprüche angegeben.

Erfindungsgemäß ist ein Ventilteil eines Steuerventils (Hydraulikventil) zur Steuerung von Druckmittelströmen gezeigt, welches insbesondere zur Steuerung von Druckmittelströmen eines hydraulischen Nockenwellenverstellers dient.

Das Ventilteil umfasst ein (hohl-)zylindrisches Ventilgehäuse mit einem in Axialenrichtung (bezogen auf die Ventillängsrichtung bzw. Zylinderachse) sich erstreckenden ersten Zylindermantelabschnitt. Der erste Zylindermantelabschnitt umfasst einen Ventilgehäusehohlraum. Zusätzlich kann das Ventilgehäuse einen senkrecht zur Axialenrichtung sich erstreckenden ersten Zylinderbodenabschnitt umfassen. In dieser Ausführungsform begrenzen der erste Zylindermantelabschnitt und der erste Zylinderbodenabschnitt gemeinsam einen einseitig offenen Ventilgehäusehohlraum. Der erste Zylindermantelabschnitt ist mit einem ersten (radialen) Arbeitsanschluss (A) versehen, welcher zum Beispiel in Form einer Ringnut mit eingearbeiteten Radialöffnungen, die in den Ventilgehäusehohlraum münden, ausgebildet sein kann. Der erste Arbeitsanschluss (A) ist beispielsweise zur Verbindung mit einer der beiden Druckkammern eines Druckraums eines hydraulischen Nockenwellenverstellers vorgesehen. Der erste Zylindermantelabschnitt ist weiterhin mit einem (radialen) zweiten Arbeitsanschluss (B) versehen, welcher zum Beispiel in Form einer Ringnut mit eingearbeiteten Radialöffnungen, die in den Ventilgehäusehohlraum münden, ausgebildet sein kann. Der zweite Arbeitsanschluss (B) ist beispielsweise zur Verbindung mit der anderen der beiden Druckkammern eines Druckraums eines hydraulischen Nockenwellenverstellers vorgesehen. Darüber hinaus ist der erste Zylindermantelabschnitt mit einem (radialen) Druckanschluss (P) versehen, welcher zum Beispiel in Form einer Ringnut mit eingearbeiteten Radialöffnungen, die in den Ventilgehäusehohlraum münden, ausgebildet sein kann. Der Druckanschluss (P) ist beispielsweise zur Verbindung mit einer Druckmittelpumpe vorgesehen. Der erste Arbeitsanschluss (A), der zweite Arbeitsanschluss (B) und der Druckanschluss (P) münden jeweils in den Ventilgehäusehohlraum.

Das Ventilteil umfasst weiterhin einen im Ventilgehäusehohlraum axial verschiebbar aufgenommenen zylindrischen Steuerkolben mit einem in Axialenrichtung sich erstreckenden zweiten Zylindermantelabschnitt und einem senkrecht zur Axialenrichtung sich erstreckenden zweiten Zylinderbodenabschnitt. Der zweite Zylindermantelabschnitt und der zweite Zylinderbodenabschnitt begrenzen gemeinsam einen Steuerkolbenhohlraum. Dieser kann beispielsweise einseitig offen aber auch, von den Anschlüssen abgesehen, geschlossen ausgeführt sein Der zweite Zylindermantelabschnitt ist benachbart zum zweiten Zylinderbodenabschnitt mit einem in den Steuerkolbenhohlraum mündenden Ablaufanschluss (T) zur Verbindung mit einem Druckmitteltank versehen.

Der Steuerkolben ist mittels entsprechender Steuerabschnitte derart ausgebildet, dass die beiden Arbeitsanschlüsse (A, B) durch Axialverschiebung des Steuerkolbens wahlweise mit dem Druckanschluss (P) und dem Ablaufanschluss (T) fluidleitend verbindbar sind. So kann der erste Arbeitsanschluss A mit dem Druckanschluss P fluidleitend verbunden werden, während der zweite Arbeitsanschluss B mit dem Ablaufanschluss T fluidleitend verbunden ist. Ebenso kann der zweite Arbeitsanschluss B mit dem Druckanschluss P fluidleitend verbunden werden, während der erste Arbeitsanschluss A mit dem Ablaufanschluss T fluidleitend verbunden ist. Auf diese Weise kann eine der beiden Druckkammern eines Druckraums eines Nockenwellenverstellers über einen Arbeitsanschluss mit einer Druckmittelpumpe verbunden werden, während die andere Druckkammer des Druckraums über den anderen Arbeitsanschluss mit dem Ablaufanschluss und angeschlossenem Druckmitteltank verbunden ist, so dass An- und Abtriebsteil hydraulisch verdreht werden können. Gleichermaßen kann der Steuerkolben die beiden Arbeitsanschlüsse A, B hydraulisch verschließen, so dass eine relative Drehlage zwischen An- und Abtriebsteil hydraulisch verspannt werden kann.

Das erfindungsgemäße Ventilteil zeichnet sich in wesentlicher Weise dadurch aus, dass der im zweiten Zylindermantelabschnitt des Steuerkolbens vorgesehene Ablaufanschluss (T) wenigstens eine in den Steuerkolbenhohlraum mündende Schrägöffnung (mit beispielsweise rundem oder rechteckigem Öffnungsquerschnitt) umfasst, deren Wandrichtung einen Winkel von kleiner als 90° (und größer als 0°) zur Axialenrichtung einnimmt (bezogen auf eine Axialenrichtung, welche zum zweiten Zylinderbodenabschnitt gerichtet ist). Vorteilhaft nimmt die Wandrichtung der Schrägöffnung einen Winkel im Bereich von 20° bis 60°, beispielsweise 30°, zur Axialenrichtung ein.

Strömt Druckmittel in axialer Richtung zum zweiten Zylinderbodenabschnitt des Steuerkolbens kann hierdurch in vorteilhafter Weise erreicht werden, dass ein Staudruck des Druckmittelstroms vermindert und eine Wirbelbildung verringert wird.

Bei einer besonders vorteilhaften Ausgestaltung des erfindungsgemäßen Ventilteils ist der zweite Zylinderbodenabschnitt des Steuerkolbens mit einer in den Steuerkolbenhohlraum vorspringenden Strömungslenkstruktur (beispielsweise in Form eines Kegels oder Keils) versehen, welche wenigstens eine Strömungslenkfläche aufweist, die einen anströmenden axialen Druckmittelstrom in Richtung zur wenigstens einen Schrägöffnung des radialen Ablaufanschlusses (T) umlenkt. Hierbei ist es besonders vorteilhaft, wenn die wenigstens eine Strömungslenkfläche in die wenigstens eine Schrägöffnung des Ablaufanschlusses (T) des Steuerkolbens übergeht, wobei insbesondere die wenigstens eine Strömungslenkfläche und die wenigstens eine Schrägöffnung in einem gleichen Winkel zur Axialenrichtung gerichtet sind.

Strömt Druckmittel in axialer Richtung zum zweiten Zylinderbodenabschnitt des Steuerkolbens, so kann hierdurch vorteilhafter Weise erreicht werden, dass ein Staudruck des Druckmittelstroms noch weiter vermindert und eine Wirbelbildung noch stärker verringert wird.

Bei einer weiteren besonders vorteilhaften Ausgestaltung des erfindungsgemäßen Ventilteils ist der Steuerkolbenhohlraum wenigstens teilweise in Form einer zum zweiten Zylinderbodenabschnitt des Steuerkolbens gerichteten Düse geformt. Die Düse weist hierbei vorteilhaft eine sich zum zweiten Zylinderbodenabschnitt des Steuerkolbens hin verjüngende Kegelstumpfform auf. Die Düse wird vorteilhaft dadurch geformt, dass an einer Innenumfangsfläche des zweiten Zylindermantelabschnitts des Steuerkolbens eine in den Steuerkolbenhohlraum vorspringende Düsenstruktur angeformt ist.

Die Erfindung erstreckt sich ferner auf ein Steuerventil zur Druckmittelsteuerung, insbesondere für einen hydraulischen Nockenwellenversteller einer Brennkraftmaschine, das ein wie oben beschriebenes Ventilteil und einen Aktuator, insbesondere in Form eines Elektromagneten, umfasst. Der Aktuator umfasst ein Stellglied, beispielsweise in Form eines Stößels, das mit dem Steuerkolben des Ventilteils derart in Wirkverbindung steht, dass der Steuerkolben entgegen der Federkraft einer Druckfeder axial verschiebbar ist.

Die Erfindung erstreckt sich weiterhin auf einen hydraulischen Nockenwellenversteller mit einem wie oben beschriebenen Steuerventil.

### Kurze Beschreibung der Zeichnungen

Die Erfindung wird nun anhand von Ausführungsbeispielen näher erläutert, wobei Bezug auf die beigefügten Zeichnungen genommen wird. Gleiche bzw. gleich wirkende Elemente sind in den Zeichnungen mit gleichen Bezugszahlen bezeichnet. Es zeigen:
Fig. 1 eine Axialschnittansicht eines Ventilteils entsprechend einem ersten Ausführungsbeispiel des erfindungsgemäßen Ventilteils;
Fig. 2A-2D eine perspektivische Ansicht, sowie mehrere Schnittansichten eines Steuerkolbens entsprechend einem zweiten Ausführungsbeispiel des erfindungsgemäßen Ventilteils;
Fig. 3 eine Axialschnittansicht eines Ventilteils entsprechend einem dritten Ausführungsbeispiel des erfindungsgemäßen Ventilteils;
Fig. 4 eine Axialschnittansicht eines im Stand der Technik bekannten gattungsgemäßen Ventilteils eines elektromagnetischen Steuerventils.

### Ausführliche Beschreibung der Zeichnungen

Fig. 4, in der ein herkömmliches gattungsgemäßes Ventilteil eines elektromagnetischen Steuerventils gezeigt ist, wurde bereits in der Beschreibungseinleitung ausführlich erläutert, so dass sich hier eine weitere Beschreibung erübrigt.

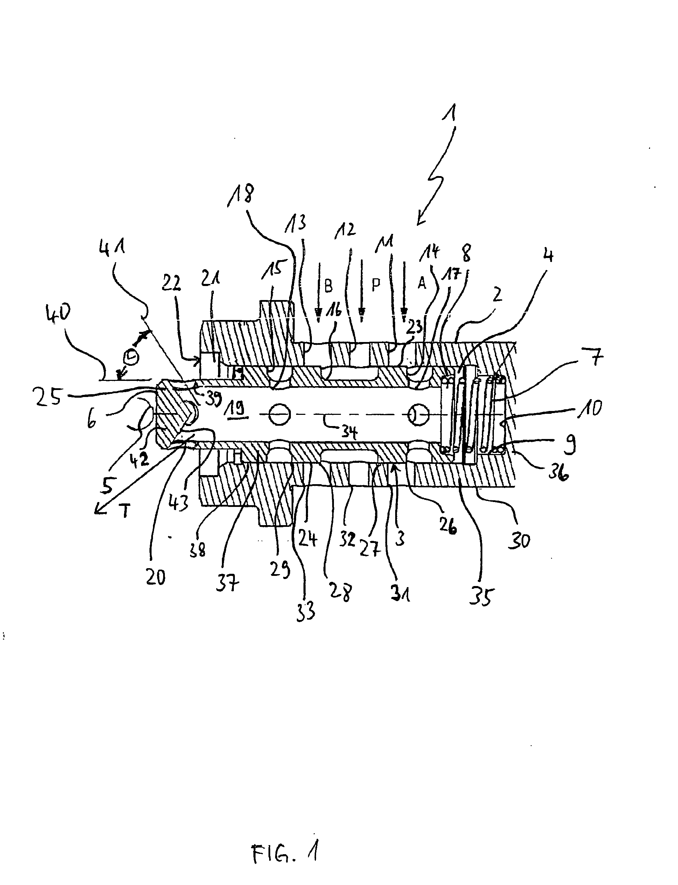

In den Figuren 1 bis 3 sind Ausführungsbeispiele für das erfindungsgemäße Ventilteil eines elektromagnetischen Steuerventils eines Nockenwellenverstellers einer Brennkraftmaschine dargestellt.

Sei zunächst Fig. 1 betrachtet, worin im Axialschnitt ein erstes Ausführungsbeispiel des erfindungsgemäßen Ventilteils gezeigt ist. Das insgesamt mit der Bezugszahl 1 bezeichnete Ventilteil 1 eines elektromagnetischen Steuerventils, insbesondere zur Druckmittelregelung eines hydraulischen Nockenwellenverstellers einer Brennkraftmaschine, umfasst ein im Wesentlichen hohlzylindrisches Ventilgehäuse 2 mit einem in Axialenrichtung (parallel zu einer Zylinderachse 34) angeordneten ersten Zylindermantelabschnitt 35 und als Endabschnitt einen sich senkrecht zur Zylinderachse 34 erstreckenden ersten Zylinderbodenabschnitt 36. Der erste Zylindermantelabschnitt 35 und der erste Zylinderbodenabschnitt 36 umgrenzen einen einseitig offenen Ventilgehäusehohlraum 4 mit einer axialen Hohlraumöffnung 22.

Koaxial zur Zylinderachse 34 ist im Ventilgehäusehohlraum 4 ein im Wesentlichen hohlzylindrischer Steuerkolben 3 axial verschiebbar aufgenommen. Der in Form eines Hohlkolbens ausgebildete Steuerkolben 3 umfasst einen in Axialrichtung (parallel zu einer Zylinderachse 34) angeordneten zweiten Zylindermantelabschnitt 37 und als Endabschnitt einen zweiten Zylinderbodenabschnitt 25, weicher sich senkrecht zur Zylinderachse 34 erstreckt. Der zweite Zylindermantelabschnitt 37 und der zweite Zylinderbodenabschnitt 25 umgrenzen einen einseitig offenen Steuerkolbenhohlraum 19 mit einer in Fig. 1 nicht näher bezeichneten axialen Hohlraumöffnung auf Seite des ersten Zylinderbodenabschnitts 36 des Ventilgehäuses 2.

An der in Fig. 1 linken Stirnfläche 6 des zweiten Zylinderbodenabschnitts 25 des Steuerkolbens 3 greift ein lediglich teilweise dargestellter Stößel 5 an, der an einem Magnetanker eines in Fig. 1 nicht dargestellten Elektromagneten (elektromagnetischer Aktuator) starr befestigt ist. Wenn der Magnetanker bestromt wird, wird der Stößel 5 in axialer Richtung zum Ventilteil 1 verschoben und verschiebt hierbei den Steuerkolben 3 axial entgegen der Federkraft einer Druckfeder 7. Die Druckfeder 7 liegt zu diesem Zweck an ihrem einen Ende dem stößelabgewandten Ende des Steuerkolbens 3 an und ist in einer sich radial erweiternden axialen ersten Ringstufe 8 des Steuerkolbens 3 aufgenommen. An ihrem anderen Ende ist die Druckfeder 7 in einer axialen zweiten Ringstufe 9 des Ventilgehäusehohlraums 4 aufgenommen und stützt sich an einer senkrecht zur Axialenrichtung 40 orientierten Bodenfläche 10 des ersten Zylinderbodenabschnitts 36 des Ventilgehäuses 2 ab. Die Druckfeder 7 ist hier beispielsweise als Schraubenfeder ausgebildet, kann jedoch auch von jedem anderen geeigneten Federtyp sein. Wird der Magnetanker nicht bestromt, so dass der Stößel 5 vom Elektromagneten nicht betätigt wird, stellt die Druckfeder 7 den Steuerkolben 3 zurück (in Fig. 1 nach links).

In die erste Außenmantelfläche 30 des ersten Zylindermantelabschnitts 35 des Ventilgehäuses 2 sind drei axial voneinander beabstandete umlaufende Ringnuten eingearbeitet, nämlich eine erste Ringnut 31, eine zweite Ringnut 32 und eine dritte Ringnut 33. In die erste Ringnut 31 sind, gleichmäßig um den Umfang verteilt, erste Radialbohrungen 11 eingearbeitet. Ebenso sind in die zweite Ringnut 32, gleichmäßig um den Umfang verteilt, zweite Radialbohrungen 12, und in die dritte Ringnut 33, gleichmäßig um den Umfang verteilt, dritte Radialbohrungen 13 eingearbeitet. Die ersten, zweiten und dritten Radialbohrungen münden jeweils in den Ventilgehäusehohlraum 4. In dem Fig. 1 gezeigten Axialschnitt gehen die Ringnuten jeweils unmittelbar in die Radialbohrungen über, so dass eine zeichnerische Unterscheidung zwischen Ringnuten und Radialbohrungen nicht erkennbar ist.

Wie durch die Pfeile angedeutet ist, dient die erste Ringnut 31 mit den ersten Radialbohrungen 11 als erster Arbeitsanschluss A, die zweite Ringnut 32 mit den zweiten Radialbohrungen 12 als Druckanschluss P und die dritte Ringnut 33 mit den dritten Radialbohrungen 13 als zweiter Arbeitsanschluss B.

In die zweite Außenmantelfläche 38 des zweiten Zylindermantelabschnitts 37 des Steuerkolbens 3 sind drei voneinander axial beabstandete umlaufende Ringnuten eingearbeitet, nämlich eine vierte Ringnut 14, eine fünfte Ringnut 15 und eine zwischen der vierten und fünften Ringnut befindliche sechste Ringnut 16. In die vierte Ringnut 14 sind, gleichmäßig um den Umfang verteilt, vierte Radialbohrungen 17 eingearbeitet, die jeweils in den Steuerkolbenhohlraum 19 münden. Ebenso sind in die fünfte Ringnut 15, gleichmäßig um den Umfang verteilt, fünfte Radialbohrungen 18 eingearbeitet, die jeweils in den Steuerkolbenhohlraum 19 münden. Die sechste Ringnut 16 dient, je nach Position des Steuerkolbens 3, als Druckmittelkanal zur Verbindung der ersten Radialbohrungen 11 mit den zweiten Radialbohrungen 12 bzw. der dritten Radialbohrungen 13 mit den zweiten Radialbohrungen 12.

Im zweiten Zylindermantelabschnitts 37 des Steuerkolbens 3 sind stößelseitig der fünften Ringnut 15, angrenzend an den zweiten Zylinderbodenabschnitt 25 des Steuerkolbens 3, in den Steuerkolbenhohlraum 19 mündende runde Schrägöffnungen 20 (Schrägbohrungen) geformt. Über die Schrägöffnungen 20 ist der Steuerkolbenhohlraum 19 zur Außenseite des Steuerkolbens 3 geöffnet, wobei die Schrägöffnungen 20 beispielsweise als Ablaufanschluss T dienen.

In der in Fig. 1 gezeigten Anschlussbelegung können über die vierte, fünfte und sechste Ringnut 14-16, sowie die in die vierte Ringnut 14 eingearbeiteten vierten Radialbohrungen 17 und die in die fünfte Ringnut 15 eingearbeiteten fünften Radialbohrungen 18, je nach axialer Position des Steuerkolbens 3, der erste Arbeitsanschluss A und der zweite Arbeitsanschluss B wahlweise mit dem Druckanschluss P oder dem Tankanschluss T fluidleitend verbunden oder getrennt werden. In FIG. 1 ist eine Stellung des Steuerkolbens 3 gezeigt, bei welcher der erste Arbeitsanschluss A mit dem Tankanschluss T und der zweite Arbeitsanschluss B mit dem Druckanschluss P fluidleitend verbunden ist. Wird der Steuerkolben 3 durch Einwirkung des Stößels 5 noch weiter in axiale Richtung entgegen die Federkraft der Druckfeder 7 (in Fig. 1 nach rechts) verschoben, kann der zweite Arbeitsanschluss B mit dem Tankanschluss T und der erste Arbeitsanschluss A mit dem Druckanschluss P fluidleitend verbunden werden. Gleichermaßen kann der Steuerkolben 3 in eine zwischen liegende Position gebracht werden, in der keiner der beiden Arbeitsanschlüsse A, B mit dem Druckanschluss P oder dem Tankanschluss T fluidleitend verbunden sind.

Benachbart zur sechsten Ringnut 16 sind ein erster Ringsteg 23 und ein zweiter Ringsteg 24 geformt, welche insbesondere der axialen Führung des Steuerkolbens 3 innerhalb des Ventilgehäuses 2 dienen. Die Umfangsflächen der beiden Ringstege 23, 24 sind so geformt, dass sie bei axialer Verschiebung des Steuerkolbens 3 die ersten Radialbohrungen 11 bzw. die dritten Radialbohrungen 13 dichtend überdecken bzw. freigeben können, um auf diese Weise über eine Änderung der Öffnungsquerschnitte die Durchflussmenge von Druckmittel (beispielsweise Öl) zu regeln. Eine Einstellung der Öffnungsquerschnitte der ersten Radialbohrungen 11 bzw. der dritten Radialbohrungen 13 erfolgt über Steuerkanten der beiden Ringstege 23, 24, nämlich eine stößelabgewandte erste Steuerkante 26 und eine stößelzugewandte zweite Steuerkante 27 des ersten Ringstegs 23 bzw. eine stößelabgewandte dritte Steuerkante 28 und eine stößelzugewandte vierte Steuerkante 29 des zweiten Ringstegs 24.

Die runden Schrägöffnungen 20 im zweiten Zylindermantelabschnitt 37 des Steuerkolbens 3 verlaufen schräg zu der durch die Zylinderachse 34 vorgegebenen Axialenrichtung 40 des Steuerkolbens 3. Genauer ausgedrückt, ist die Wandrichtung 41 der die Schrägöffnungen 20 formenden Schrägöffnungswände 39 schräg zur Axialenrichtung 40, wobei die Wandrichtung 41 einen Winkel Θ zur Axialenrichtung 40 einnimmt, der größer als 0° und kleiner als 90° ist. In dem Ausführungsbeispiel von Fig. 1 ist der Winkel Θ in Bezug auf eine zum Stößel 5 bzw. zum zweiten Zylinderbodenabschnitt 25 des Steuerkolbens 3 gerichtete Axialenrichtung 40 angegeben. Der Winkel Θ liegt vorzugsweise in einem Winkelbereich zwischen 20° und 60° und beträgt im Ausführungsbeispiel ca. 30°.

Weiterhin ist in dem Ausführungsbeispiel von Fig. 1 der zweite Zylinderbodenabschnitt 25 des Steuerkolbens 3 kegelförmig gestaltet, wobei ein Kegel 42 zur stößelabgewandten Seite des Steuerkolbens 3 in den Steuerkolbenhohlraum 19 vorspringt. Der Kegel 42 wird durch eine Kegelfläche 43 begrenzt, welche im Axialschnitt bündig und geradlinig in die Schrägöffnungen 20 übergeht, wobei die Kegelfläche 43 und die Wandrichtung 41 der Schrägöffnungen 20 im Axialschnitt einen gleichen Winkel zur Axialenrichtung 40 einnehmen.

In der in Fig. 1 gezeigten Stellung des Steuerkolbens 3, in der der erste Arbeitsanschluss A mit dem Tankanschluss T fluidleitend verbunden ist, kann Druckmittel über die ersten Radialbohrungen 11 und die vierten Radialbohrungen 17 in den Steuerkolbenhohlraum 19 einströmen. Die radial-einwärts gerichteten Druckmittelströme werden in einen zum zweiten Zylinderbodenabschnitt 25 gerichteten axialen Druckmittelstrom umgelenkt, der im Wesentlichen mittig des Steuerkolbenhohlraums 19 strömt.

Der axiale Druckmittelstrom trifft auf die Kegelfläche 43 des Kegels 42 und wird von der als Strömungslenkfläche wirkenden Kegelfläche 43 zu den Schrägöffnungen 20 umgelenkt, wobei in vorteilhafter Weise ein Staudruck gegenüber einer herkömmlichen (senkrecht zur Axialenrichtung stehenden) Strömungslenkfläche vermindert und eine Wirbelbildung verringert werden kann.

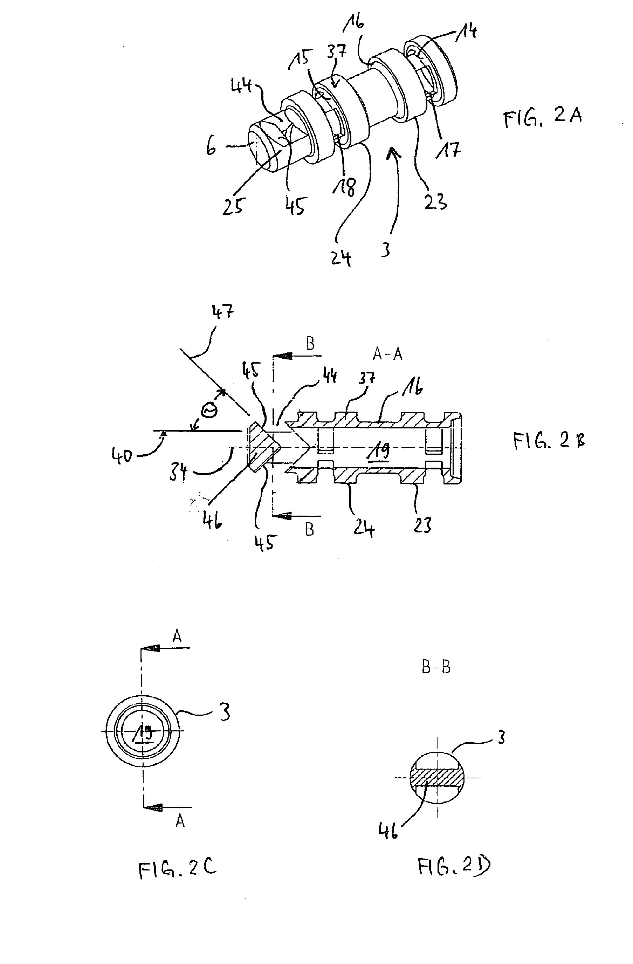

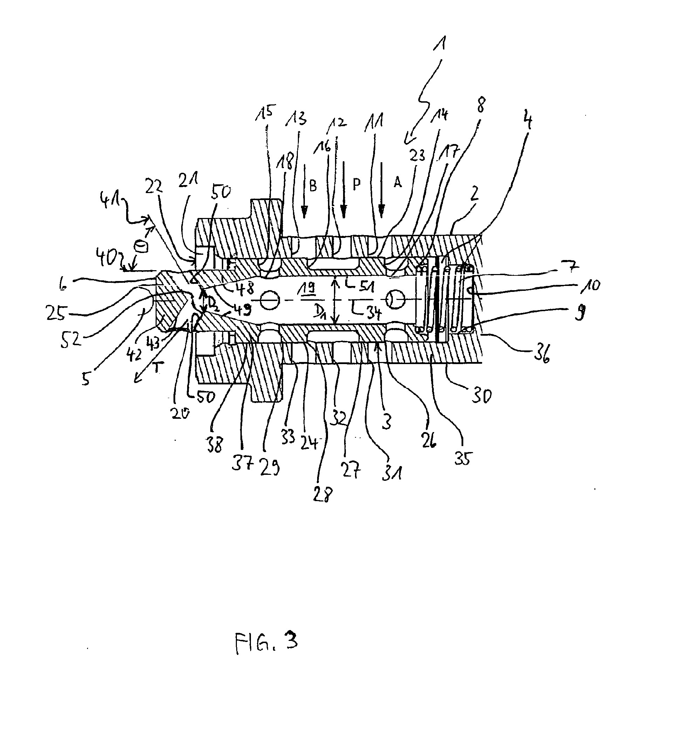

Es wird nun Bezug auf die Fig. 2A-2D und Fig. 3 genommen, worin weitere Ausführungsbeispiele des erfindungsgemäßen Ventilteils eines elektromagnetischen Steuerventils für einen Nockenwellenversteller dargestellt sind. Um unnötige Wiederholungen zu vermeiden, werden lediglich die jeweiligen Unterschiede zu dem in Fig. 1 gezeigten ersten Ausführungsbeispiel des erfindungsgemäßen Ventilteils erläutert. Im Übrigen wird auf die oben zu dem ersten Ausführungsbeispiel von Fig. 1 gemachten Ausführungen Bezug genommen.

Seien zunächst die Fig. 2A-2D betrachtet, worin eine perspektivische Ansicht, sowie mehrere Schnittansichten eines Steuerkolbens gemäß eines zweiten Ausführungsbeispiels des erfindungsgemäßen Ventilteils eines elektromagnetischen Steuerventils gezeigt sind. In den Fig. 2A-2D ist nicht gezeigt, dass der Steuerkolben in einem in Fig. 1 dargestellten Ventilgehäuse axial verschiebbar aufgenommen ist.

Wie insbesondere FIG. 2A entnommen werden kann, ist der Steuerkolben 3 stößelseitig der fünften Ringnut 15, angrenzend an den zweiten Zylinderbodenabschnitt 25 des Steuerkolbens 3, mit zwei die Wand des Zylindermantelabschnitts 37 durchbrechenden, in der Aufsicht im Wesentlichen rechteckigen Schrägöffnungen 44 versehen. Die Schrägöffnungen 44 münden jeweils in den Steuerkolbenhohlraum 19, wodurch der Steuerkolbenhohlraum 19 mit der Außenseite des Steuerkolbens 3 fluidleitend verbunden wird. Die Schrägöffnungen 44 dienen als Ablaufanschluss T.

In dem Ausführungsbeispiel von Fig. 2 ist der zweite Zylinderbodenabschnitt 25 des Steuerkolbens 3 keilförmig gestaltet, wobei ein Keil 46 zur stößelabgewandten Seite des Steuerkolbens 3 in den Steuerkolbenhohlraum 19 vorspringt. Der Keil 46 formt im Steuerkolbenhohlraum 19 zwei Keilflächen 45, welche jeweils in die Schrägöffnungen 44 übergehen, so dass die stößelseitigen Wandabschnitte der Schrägöffnungen 44 Teil der Keilflächen 45 sind. Die Wandrichtung 47 der stößelseitigen Wandabschnitte der Schrägöffnungen 44 bzw. die Keilflächen 45 sind schräg zur Axialenrichtung 40 gerichtet, wobei der Winkel Θ in Bezug auf eine zum Stößel 5 bzw. zum zweiten Zylinderbodenabschnitt 25 des Steuerkolbens 3 gerichteten Axialenrichtung 40 angegeben ist. Der Winkel Θ liegt vorzugsweise in einem Winkelbereich zwischen 20° und 60° und beträgt im Ausführungsbeispiel ca. 30°.

Wenn ein axialer Druckmittelstrom auf die Keilflächen 45 trifft, wird dieser durch die als Strömungslenkflächen wirkenden Keilflächen 45 zu den Schrägöffnungen 44 umgelenkt, wobei in vorteilhafter Weise ein hierbei auftretender Staudruck gegenüber einer herkömmlichen senkrecht zur Axialenrichtung stehenden Strömungslenkfläche vermindert und eine Wirbelbildung verringert werden kann.

Sei nun Fig. 3 betrachtet, worin eine Axialschnittansicht eines Ventilteils entsprechend einem dritten Ausführungsbeispiel des erfindungsgemäßen Ventilteils eines elektromagnetischen Steuerventils gezeigt ist.

Das in Fig. 3 gezeigte Ventilteil unterscheidet sich von dem in Fig. 1 gezeigten Ventilteil dahingehend, dass in dem Steuerkolbenhohlraum 19 eine zum zweiten Zylinderbodenabschnitt 25 gerichtete Düse geformt ist. Zu diesem Zweck ist hohlraumseitig des zweiten Zylindermantelabschnitts 37 umlaufend auf der Innenumfangsfläche 51 des zweiten Zylindermantelabschnitts 37 eine den Steuerkolbenhohlraum 19 verengende Düsenstruktur 48 angeformt. Die Düsenstruktur 48 weist beiderseits einer einen engsten Düsendurchmesser definierenden Düsenkante 52 eine erste Düsenfläche 48 und eine zweiten Düsenfläche 49 auf. Die erste Düsenfläche 48 verjüngt den Steuerkolbenhohlraum 19 in Richtung des zweiten Zylinderbodenabschnitts 25 kegelstumpfförmig bis zur Düsenkante 52. Die zweite Düsenfläche 50 geht im Axialschnitt geradlinig in die runden Schrägöffnungen 20 über, wobei die zweite Düsenfläche 50 und die Wand der Schrägöffnungen 20 im Axialschnitt einen gleichen Winkel zur Axialenrichtung 40 einnehmen. An ihrer engsten Stelle, der Düsenkante 52, verengt die Düsenstruktur 48 den Durchmesser des Steuerkolbenhohlraums 19 von einer Abmessung D₁ auf eine Abmessung D₂ (D₂ < D₁).

Wenn ein axialer Druckmittelstrom in die von der Düsenstruktur 48 geformte Düse eintritt, wird die Stromgeschwindigkeit durch die Düsenwirkung erhöht. Trifft der beschleunigte axiale Druckmittelstrom auf die Kegelfläche 43 des Kegels 42 wird dieser durch die als Strömungslenkflächen wirkende Kegelfläche 43 und die als Strömungslenkfläche wirkende zweite Düsenfläche 50 zu den runden Schrägöffnungen 20 umgelenkt, wobei in vorteilhafter Weise ein hierbei auftretender Staudruck gegenüber einer herkömmlicher Weise senkrecht zur Axialenrichtung stehenden Strömungslenkfläche vermindert und insbesondere eine Wirbelbildung durch die erhöhte Stromgeschwindigkeit vermieden werden kann.

Obgleich in den Ausführungsbeispielen ein Verschiebungsmechanismus veranschaulicht ist, bei dem der Steuerkolben 2 durch einen mittels eines Elektromagneten betätigten Stößel 5 verschoben wird, kann gleichermaßen ein anderer Aktuator zu Betätigung des Stößels 5, wie beispielsweise ein elektrischer Stellmotor, vorgesehen sein. Weiterhin können anstelle der von dem Kegel 42 und dem Keil 46 gebildeten Strömungslenkfläche andere geeignet geformte Strömungslenkflächen vorgesehen sein.

Obgleich das Ventilteil und das zugehörige Steuerventil in der Verwendung zur Druckmittelsteuerung für einen Nockenwellenversteller einer Brennkraftmaschine beschrieben wurden, können Ventilteil bzw. Steuerventil gleichermaßen zur Steuerung von Druckmittelströmen in anderen Vorrichtungen eingesetzt werden.

### FURNISHED EMPTY UPON FILING

### Bezugszeichenliste

- 1: Ventilteil
- 2: Ventilgehäuse
- 3: Steuerkolben
- 4: Ventilgehäusehohlraum
- 5: Stößel
- 6: Stirnfläche
- 7: Druckfeder
- 8: erste Ringstufe
- 9: zweite Ringstufe
- 10: Bodenfläche
- 11: erste Radialbohrungen
- 12: zweite Radialbohrungen
- 13: dritte Radialbohrungen
- 14: vierte Ringnut
- 15: fünfte Ringnut
- 16: sechste Ringnut
- 17: vierte Radialbohrungen
- 18: fünfte Radialbohrungen
- 19: Steuerkolbenhohlraum
- 20: runde Schrägöffnung
- 21: dritte Ringstufe
- 22: Hohlraumöffnung
- 23: erster Ringsteg
- 24: zweiter Ringsteg
- 25: zweiter Zylinderbodenabschnitt
- 26: erste Steuerkante
- 27: zweite Steuerkante
- 28: dritte Steuerkante
- 29: vierte Steuerkante
- 30: erste Außenmantelfläche
- 31: erste Ringnut
- 32: zweite Ringnut
- 33: dritte Ringnut
- 34: Zylinderachse
- 35: erster Zylindermantelabschnitt
- 36: erster Zylinderbodenabschnitt
- 37: zweiter Zylindermantelabschnitt
- 38: zweite Außenmantelfläche
- 39: Schrägöffnungswand
- 40: Axialenrichtung
- 41: Wandrichtung
- 42: Kegel
- 43: Kegelfläche
- 44: rechteckige Schrägöffnung
- 45: Keilfläche
- 46: Keil
- 47: Wandrichtung
- 48: Düsenstruktur
- 49: erste Düsenfläche
- 50: zweite Düsenfläche
- 51: Innenumfangsfläche
- 52: Düsenkante
- 100: Ventilteil
- 101: Ventilgehäuse
- 102: Steuerkolben
- 103: Ventilgehäusehohlraum
- 104: Stößel
- 105: Stirnfläche
- 106: Druckfeder
- 107: erste Ringstufe
- 108: zweite Ringstufe
- 109: Bodenfläche
- 110: erste Radialbohrungen
- 111: zweite Radialbohrungen
- 112: dritte Radialbohrungen
- 113: sechste Ringnut
- 114: vierte Ringnut
- 115: fünfte Ringnut
- 116: vierte Radialbohrungen
- 117: fünfte Radialbohrungen
- 118: Steuerkolbenhohlraum
- 119: sechste Radialbohrungen
- 120: dritte Ringstufe
- 121: Hohlraumöffnung
- 122: erster Ringsteg
- 123: zweiter Ringsteg
- 124: erste Ringnut
- 125: zweite Ringnut
- 126: dritte Ringnut

## Patentansprüche

1. Ventilteil (1) eines Steuerventils zur Steuerung von Druckmittelströmen, welches umfasst:
ein zylindrisches Ventilgehäuse (2) mit einem in Axialenrichtung (40) sich erstrecken ersten Zylindermantelabschnitt (35), welcher einen Ventilgehäusehohlraum (4) umfasst, wobei der erste Zylindermantelabschnitt (35) mit einem ersten Arbeitsanschluss (A), einem zweiten Arbeitsanschluss (B) und einem Druckanschluss (P) versehen ist, die jeweils in den Ventilgehäusehohlraum (4) münden, und
ein im Ventilgehäusehohlraum (4) axial verschiebbar aufgenommener zylindrischer Steuerkolben (3) mit einem in Axialenrichtung (40) sich erstrecken zweiten Zylindermantelabschnitt (37) und einem senkrecht zur Axialenrichtung (40) sich erstreckenden zweiten Zylinderbodenabschnitt (25), welche einen Steuerkolbenhohlraum (19) zumindest teilweise begrenzen, wobei der zweite Zylindermantelabschnitt (37), benachbart zum zweiten Zylinderbodenabschnitt (25), mit einem in den Steuerkolbenhohlraum (19) mündenden Ablaufanschluss (T) versehen ist, und wobei der Steuerkolben (3) so ausgebildet ist, dass die Arbeitsanschlüsse (A, B) durch Axialverschiebung des Steuerkolbens (3) wahlweise mit dem Druckanschluss (P) und dem Ablaufanschluss (T) fluidleitend verbindbar sind, **dadurch gekennzeichnet, dass** der Ablaufanschluss (T) des Steuerkolbens (3) wenigstens eine Schrägöffnung (20, 44) umfasst, deren Wandrichtung (41, 47) einen Winkel (Θ) von kleiner als 90° zur Axialenrichtung (40) einnimmt.

2. Ventilteil nach Anspruch 1, **dadurch gekennzeichnet, dass** die Wandrichtung (41, 47) der wenigstens einen Schrägöffnung (20, 44) einen Winkel (Θ) in einem Winkelbereich von 20° bis 60°, beispielsweise 30°, zur Axialenrichtung (40) einnimmt.

3. Ventilteil nach Anspruch 1 oder 2, **dadurch gekennzeichnet, dass** die wenigstens eine Schrägöffnung (20) des Ablaufanschlusses (T) des Steuerkolbens (3) einen runden Öffnungsquerschnitt hat.

4. Ventilteil nach Anspruch 1 oder 2, **dadurch gekennzeichnet, dass** die wenigstens eine Schrägöffnung (44) des Ablaufanschlusses (T) des Steuerkolbens (3) einen rechteckigen Öffnungsquerschnitt hat.

5. Ventilteil nach einem der Ansprüche 1 bis 4, **dadurch gekennzeichnet, dass** der zweite Zylinderbodenabschnitt (25) des Steuerkolbens (3) mit einer in den Steuerkolbenhohlraum (19) vorspringenden Strömungslenkstruktur (42, 46) versehen ist, welche wenigstens eine Strömungslenkfläche (43, 45) aufweist, welche einen anströmenden Druckmittelstrom in Richtung zur wenigstens einen Schrägöffnung (20, 44) des Ablaufanschlusses (T) umlenkt.

6. Ventilteil nach Anspruch 5, **dadurch gekennzeichnet, dass** die wenigstens eine Strömungslenkfläche (43, 45) in die wenigstens eine Schrägöffnung (20, 44) des Ablaufanschlusses (T) des Steuerkolbens (3) übergeht.

7. Ventilteil nach Anspruch 6, **dadurch gekennzeichnet, dass** die wenigstens eine Strömungslenkfläche (43, 45) und die wenigstens eine Schrägöffnung (20, 44) in einem gleichen Winkel zur Axialenrichtung (40) gerichtet sind.

8. Ventilteil nach einem der Ansprüche 5 bis 7, **dadurch gekennzeichnet, dass** die Strömungslenkstruktur in Form eines Kegels (42) ausgebildet ist.

9. Ventilteil nach einem der Ansprüche 5 bis 7, **dadurch gekennzeichnet, dass** die Strömungslenkstruktur in Form eines Keils (46) ausgebildet ist.

10. Ventilteil nach einem der Ansprüche 1 bis 9, **dadurch gekennzeichnet, dass** der Steuerkolbenhohlraum (19) wenigstens teilweise in Form einer zum zweiten Zylinderbodenabschnitt (25) des Steuerkolbens (3) gerichteten Düse geformt ist.

11. Ventilteil nach Anspruch 10, **dadurch gekennzeichnet, dass** die Düse eine sich zum zweiten Zylinderbodenabschnitt (25) des Steuerkolbens (3) hin verjüngende Kegelstumpfform aufweist.

12. Ventilteil nach Anspruch 10 oder 11, **dadurch gekennzeichnet, dass** an einer Innenumfangsfläche (519 des zweiten Zylindermantelabschnitts (37) des Steuerkolbens (3) eine in den Steuerkolbenhohlraum (19) vorspringende Düsenstruktur (48) angeformt ist.

13. Ventilteil nach Anspruch 1, **dadurch gekennzeichnet, dass** das Ventilgehaüse (2) ein senkrecht zur Axialenrichtung (40) sich erstreckenden ersten Zylinderbodenabschnitt (36) aufweist, wobei der ersten Zylinderbodenabschnitt (36) und der erste Zylindermantelabschnitt (35) einen einseitig offenen Ventilgehäusehohlraum (4) begrenzen.

14. Ventilteil nach Anspruch 1, **dadurch gekennzeichnet, dass** der zweite Zylindermantelabschnitt (37) und der zweite Zylinderbodenabschnitt (25), einen einseitig offenen Steuerkolbenhohlraum (19) begrenzen.

15. Steuerventil, welches einen Aktuator und ein von dem Aktuator betätigtes Ventilteil nach einem der Ansprüche 1 bis 14 umfasst.

16. Nockenwellenversteller mit einem Steuerventil nach Anspruch 15.

## Claims

1. Valve part (1) of a control valve for controlling flows of pressurized medium, the valve part comprising:
a cylindrical valve housing (2) with a first cylinder casing section (35), which extends in an axial direction (40) and which comprises a valve housing hollow space (4), wherein the first cylinder casing section (35) is provided with a first work connection (A), a second work connection (B), and a pressure connection (P),
each of which open into the valve housing hollow space (4), and
a cylindrical control piston (3), which is held in the valve housing hollow space (4) so that it can move in the axial direction and which includes a second cylinder casing section (37) extending in the axial direction (40) and a second cylinder base section (25) extending perpendicular to the axial direction (40), the second cylinder casing section (37) and the second cylinder base section (25) at least partially defining a control piston hollow space (19), wherein the second cylinder casing section (37), adjacent to the second cylinder base section (25), is provided with a discharge connection (T) opening into the control piston hollow space (19), and wherein the control piston (3) is constructed in such a way that the work connections (A, B) can be connected selectively in a fluid conducting way to the pressure connection (P) and to the discharge connection (T) through axial displacement of the control piston (3), **characterized in that** the discharge connection (T) of the control piston (3) comprises at least one inclined opening (20, 44), having a wall direction (41, 47) that assumes an angle (Θ) of less than 90° relative to the axial direction (40).

2. Valve part according to Claim 1, **characterized in that** the wall direction (41, 47) of the at least one inclined opening (20, 44) assumes an angle (Θ) in an angular range of from 20° to 60°, 30° for example, relative to the axial direction (40).

3. Valve part according to Claim 1 or 2, **characterized in that** the at least one inclined opening (20) of the discharge connection (T) of the control piston (3) has a round opening cross section.

4. Valve part according to Claim 1 or 2, **characterized in that** the at least one inclined opening (44) of the discharge connection (T) of the control piston (3) has a rectangular opening cross section.

5. Valve part according to one of Claims 1 to 4, **characterized in that** the second cylinder base section (25) of the control piston (3) is provided with a flow guiding structure (42, 46) which projects into the control piston hollow space (19) and which has at least one flow guiding surface (43, 45) that deflects an incoming flow of pressurized medium in a direction toward the at least one inclined opening (20, 44) of the discharge connection (T).

6. Valve part according to Claim 5, **characterized in that** the at least one flow guiding surface (43, 45) transitions into the at least one inclined opening (20, 44) of the discharge connection (T) of the control piston (3).

7. Valve part according to Claim 6, **characterized in that** the at least one flow guiding surface (43, 45) and the at least one inclined opening (20, 44) are directed at the same angle to the axial direction (40).

8. Valve part according to one of Claims 5 to 7, **characterized in that** the flow guiding structure is constructed in the form of a cone (42).

9. Valve part according to one of Claims 5 to 7, **characterized in that** the flow guiding structure is constructed in the form of a wedge (46).

10. Valve part according to one of Claims 1 to 9, **characterized in that** the control piston hollow space (19) is shaped at least partially as a nozzle directed toward the second cylinder base section (25) of the control piston (3).

11. Valve part according to Claim 10, **characterized in that** the nozzle has a frustoconical shape tapering toward the second cylinder base section (25) of the control piston (3).

12. Valve part according to Claim 10 or 11, **characterized in that** a nozzle structure (48) projecting into the control piston hollow space (19) is formed on an inner peripheral surface (51) of the second cylinder casing section (37) of the control piston (3).

13. Valve part according to Claim 1, **characterized in that** the valve housing (2) has a first cylinder base section (36) extending perpendicular to the axial direction (40), wherein the first cylinder base section (36) and the first cylinder casing section (35) define a valve housing hollow space (4) that is open on one side.

14. Valve part according to Claim 1, **characterized in that** the second cylinder casing section (37) and the second cylinder base section (25) define a control piston hollow space (19) that is open on one side.

15. Control valve comprising an actuator and a valve part, which is actuated by the actuator, according to one of Claims 1 to 14.

16. Camshaft adjuster with a control valve according to Claim 15.

## Revendications

1. Pièce de soupape (1) d'une soupape de commande pour la commande de flux de fluide sous pression, comprenant :
un boîtier de soupape cylindrique (2) comprenant une première portion d'enveloppe de cylindre (35) s'étendant dans la direction axiale (40), qui comprend une cavité de boîtier de soupape (4), la première portion d'enveloppe de cylindre (35) étant pourvue d'un premier raccord de travail (A), d'un deuxième raccord de travail (B) et d'un raccord de pression (P), qui débouchent à chaque fois dans la cavité de boîtier de soupape (4), et un piston de commande cylindrique (3) reçu de manière déplaçable axialement dans la cavité de boîtier de soupape (4), avec une deuxième portion d'enveloppe de cylindre (37) s'étendant dans la direction axiale (40) et une deuxième portion de fond de cylindre (25) s'étendant perpendiculairement à la direction axiale (40), qui délimitent au moins en partie une cavité de piston de commande (19), la deuxième portion d'enveloppe de cylindre (37), adjacente à la deuxième portion de fond de cylindre (25), étant pourvue d'un raccord d'écoulement (T) débouchant dans la cavité de piston de commande (19), et le piston de commande (3) étant réalisé de telle sorte que les raccords de travail (A, B) puissent être connectés fluidiquement par déplacement axial du piston de commande (3) de manière sélective au raccord de pression (P) ou au raccord d'écoulement (T), **caractérisée en ce que** le raccord d'écoulement (T) du piston de commande (3) comprend au moins une ouverture oblique (20, 44) dont l'orientation de la paroi (41, 47) forme un angle (θ) inférieur à 90° avec la direction axiale (40).

2. Pièce de soupape selon la revendication 1, **caractérisée en ce que** la direction de paroi (41, 47) de l'au moins une ouverture oblique (20, 44) forme un angle (θ) dans une plage angulaire de 20° à 60°, par exemple de 30°, avec la direction axiale (40).

3. Pièce de soupape selon la revendication 1 ou 2, **caractérisée en ce que** l'au moins une ouverture oblique (20) du raccord d'écoulement (T) du piston de commande (3) a une section transversale d'ouverture circulaire.

4. Pièce de soupape selon la revendication 1 ou 2, **caractérisée en ce que** l'au moins une ouverture oblique (44) du raccord d'écoulement (T) du piston de commande (3) a une section transversale d'ouverture rectangulaire.

5. Pièce de soupape selon l'une quelconque des revendications 1 à 4, **caractérisée en ce que** la deuxième portion de fond de cylindre (25) du piston de commande (3) est pourvue d'une structure de direction de l'écoulement (42, 46) saillant dans la cavité du piston de commande (19), qui présente au moins une surface de direction de l'écoulement (43, 45) qui dévie un afflux de fluide sous pression dans la direction de l'au moins une ouverture oblique (20, 44) du raccord d'écoulement (T).

6. Pièce de soupape selon la revendication 5, **caractérisée en ce que** l'au moins une surface de direction d'écoulement (43, 45) se prolonge dans l'au moins une ouverture oblique (20, 44) du raccord d'écoulement (T) du piston de commande (3) .

7. Pièce de soupape selon la revendication 6, **caractérisée en ce que** l'au moins une surface de direction d'écoulement (43, 45) et l'au moins une ouverture oblique (20, 44) sont orientées suivant un même angle par rapport à la direction axiale (40) .

8. Pièce de soupape selon l'une quelconque des revendications 5 à 7, **caractérisée en ce que** la structure de direction de l'écoulement est réalisée sous la forme d'un cône (42).

9. Pièce de soupape selon l'une quelconque des revendications 5 à 7, **caractérisée en ce que** la structure de direction d'écoulement est réalisée sous la forme d'une clavette (46).

10. Pièce de soupape selon l'une quelconque des revendications 1 à 9, **caractérisée en ce que** la cavité du piston de commande (19) est formée de manière orientée au moins en partie en forme d'une buse orientée vers la deuxième portion de fond de cylindre (25) du piston de commande (3).

11. Pièce de soupape selon la revendication 10, **caractérisée en ce que** la buse présente une forme tronconique se rétrécissant vers la deuxième portion de fond de cylindre (25) du piston de commande (3).

12. Pièce de soupape selon la revendication 10 ou 11, **caractérisée en ce qu'**une structure de buse (48) saillant dans la cavité du piston de commande (19) est façonnée sur une surface périphérique intérieure (51) de la deuxième portion d'enveloppe de cylindre (37) du piston de commande (3).

13. Pièce de soupape selon la revendication 1, **caractérisée en ce que** le boîtier de soupape (2) présente une première portion de fond de cylindre (36) s'étendant perpendiculairement à la direction axiale (40), la première portion de fond de cylindre (36) et la première portion d'enveloppe de cylindre (35) délimitant une cavité de boîtier de soupape (4) ouverte d'un côté.

14. Pièce de soupape selon la revendication 1, **caractérisée en ce que** la deuxième portion d'enveloppe de cylindre (37) et la deuxième portion de fond de cylindre (25) délimitent une cavité de piston de commande (19) ouverte d'un côté.

15. Soupape de commande, qui comprend un actionneur et une partie de soupape actionnée par l'actionneur selon l'une quelconque des revendications 1 à 4.

16. Déphaseur d'arbre à cames comprenant une soupape de commande selon la revendication 15.
